# EUROPÄISCHE PATENTSCHRIFT

(11) **EP 4 141 171 B1**
(45) Veröffentlichungstag und Bekanntmachung des Hinweises auf die Patenterteilung: **22.01.2025**
(21) Anmeldenummer: 22191162.1
(22) Anmeldetag: 19.08.2022
(51) Int. Cl.: E01C 19/48, B62D 5/12, B62D 7/02

(54) **SELBSTFAHRENDE BAUMASCHINE MIT LENKANTRIEB**
SELF-PROPELLED CONSTRUCTION MACHINE WITH STEERING DRIVE
ENGIN DE CHANTIER AUTOMOTEUR À DIRECTION ASSISTÉE

(30) Priorität: 19.08.2021 DE 102021121583
(43) Veröffentlichungstag der Anmeldung: 01.03.2023
(73) Patentinhaber: Wirtgen GmbH, 53578 Windhagen (DE)
(72) Erfinder: Verhaelen, Philip, 53797 Lohmar (DE); Engels, Michael, 56410 Montabaur (DE)
(74) Vertreter: dompatent von Kreisler Selting Werner - Partnerschaft von Patent- und Rechtsanwälten mbB

(56) Entgegenhaltungen:
- EP-A1- 0 533 179
- US-A- 4 003 447
- US-A1- 2017 282 983

## Beschreibung

Die Erfindung betrifft eine selbstfahrende Baumaschine nach dem Oberbegriff des Anspruchs 1.

Es sind zum Beispiel aus der US2017/282983 A1 selbstfahrende Baumaschinen, insbesondere Gleitschalungsfertiger bekannt, die einen Maschinenrahmen und zumindest drei Fahreinrichtungen aufweisen. Die Fahreinrichtungen sind jeweils über Hubsäulen mit dem Maschinenrahmen verbunden, wobei wenigstens eine der zumindest drei Fahreinrichtungen mittels jeweils eines Lenkantriebs lenkbar sind, wobei der jeweilige Lenkantrieb zumindest einen ersten Teil aufweist, der mit der jeweiligen Fahreinrichtung verbunden ist und einen zweiten Teil aufweist, der mit der jeweiligen Hubsäule verbunden ist.

Selbstfahrende Baumaschinen können insbesondere Gleitschalungsfertiger sein, oder auch beispielsweise Straßenfräsmaschinen, Abbaumaschinen (Surface Miner), Stabilisierer oder Recycler sein.

Gleitschalungsfertiger dienen dazu, Oberflächen oder Profile aus Beton herzustellen. Ein Gleitschalungsfertiger kann unterschiedliche Arbeitseinrichtungen beispielsweise zur Herstellung einer Fahrbahn aus Beton aufweisen, wobei zum Formen des Betons eine sich quer über die Fahrbahn zwischen den Laufwerken erstreckende Betonmulde verwendet werden kann. Es können auch Profile mit einer neben den Fahrwerken angeordneten sogenannten Seitenschalung erzeugt werden.

Bei selbstfahrenden Baumaschinen, insbesondere Gleitschalungsfertigern besteht zunehmend der Bedarf, dass die Lenkung der Fahreinrichtungen mittels der Lenkantriebe sehr schnell erfolgen soll und große Lenkwinkel ermöglicht werden sollen.

Der Erfindung liegt daher die Aufgabe zugrunde, eine selbstfahrende Baumaschine, insbesondere Gleitschalungsfertiger, zu schaffen, bei der die Lenkung sehr schnell erfolgt und einen großen Lenkwinkel aufweist.

Zur Lösung dieser Aufgabe dienen die Merkmale des Anspruchs 1.

Die Erfindung sieht in vorteilhafter Weise vor, dass der Lenkantrieb zumindest eine erste Zahnstange aufweist, wobei die erste Zahnstange mittels zumindest eines ersten linearen Antriebsmittels bewegbar ist, wobei Zähne der zumindest einen ersten Zahnstange in Zähne zumindest eines Zahnrads eingreifen und so mittels der Bewegung der Zahnstange das Zahnrad drehbar ist.

Das zumindest eine erste lineare Antriebsmittel hat gegenüber bspw. eines Schneckenantriebs den Vorteil, dass eine schnelle Lenkwinkelverstellung erfolgen kann. Ferner hat die Verwendung einer mit einem Zahnrad kämmenden Zahnstange den Vorteil, dass hierbei große Lenkwinkel ermöglicht werden.

Gemäß einer Ausführungsform kann die aktuelle Lenkwinkelstellung bzw. Lenkwinkelposition und/oder Lenkgeschwindigkeit über Sensoren erfasst werden. Mittels der Sensoren können beispielsweise die Verstellung bzw. Verstellbewegung des linearen Antriebsmittels erfasst werden

Die aktuelle Lenkwinkelstellung bzw. Lenkwinkelposition kann beispielswese über einen Wegsensor erfasst werden, der die Verstellbewegung des linearen Antriebsmittels erfasst.

Hierzu kann die Relativposition eines beweglichen Teils des linearen Antriebsmittels relativ zu einem Anlenkpunkt des linearen Antriebsmittels erfasst und aufgrund der Geometrie der Zahnstange und des Zahnrads auf die aktuelle Lenkwinkelstellung geschlossen werden.

Alternativ kann der Zusammenhang zwischen Relativposition des beweglichen Teils des linearen Antriebsmittels relativ zu einem Anlenkpunkts des linearen Antriebsmittels und dem Lenkwinkel empirisch ermittelt werden.

Eine solche Erfassung der Verstellbewegung des linearen Antriebsmitttels hat unabhängig von der Erfassung des Lenkwinkels weiterhin den Vorteil, dass durch die Erfassung der Änderung der Relativposition des beweglichen Teils des linearen Antriebsmittels relativ zu einem Anlenkpunkt des linearen Antriebsmittels über die Zeit die Geschwindigkeit der Lenkwinkeländerung erfasst und kontrolliert werden.

Hierdurch ist es möglich bei vorgesehenen großen Lenkwinkeländerungen eine größere Verstellgeschwindigkeit für das lineare Antriebsmittel zu wählen und bei kleinen Lenkwinkeländerungen zur Erhöhung der Genauigkeit eine kleinere Verstellgeschwindigkeit für das lineare Antriebsmittel zu wählen.

Das erste lineare Antriebsmittel kann ein erstes hydraulisches oder pneumatisches Antriebsmittel sein.

Alternativ kann zumindest das erste lineare Antriebsmittel auch ein elektrisches Antriebsmittel oder jegliches anderes lineare Antriebsmittel sein.

Besonders bevorzugt kann das erste lineare Antriebsmittel einen integrierten Wegmesssensor zur Ermittlung der Verstellposition aufweisen.

Die vorliegende Erfindung hat somit den Vorteil, dass die Lenkung sehr schnell erfolgen kann. Ferner besteht auch nicht das Problem von Beschädigungen durch mechanische Selbsthemmung. Eine mechanische Selbsthemmung kann beispielsweise beim Stand der Technik bei Lenkantrieben mit Schneckengetrieben auftreten. Wenn eine Fahreinrichtung beispielsweise aufgrund von Fahren gegen eine Kante etwas verschwenkt wird, können aus dem Stand der Technik bekannte Lenkgetriebe aufgrund der Selbsthemmung der Bewegung nicht folgen und es kommt ggf. zu Beschädigungen am Lenkgetriebe selbst, am Fahrwerk oder an einem Verbindungselement zwischen Fahrwerk und Lenkgetriebe. Da im vorliegenden Fall jedoch das erste lineare Antriebsmittel ein hydraulisches oder pneumatisches Antriebsmittel ist, kommt es nicht zu einer solchen mechanischen Selbsthemmung. Den gleichen Vorteil hätte auch ein erstes lineares Antriebsmittel, das ein elektrisches Antriebsmittel wäre.

Bei Verwendung eines hydraulischen oder pneumatischen Antriebsmittels kann beispielsweise ein Überdruckventil in dem Hydraulik- oder Pneumatikkreislauf vorgesehen sein. Wenn eine Kraft auf das hydraulisches oder pneumatisches Antriebsmittel einwirkt, wenn der zulässige Druck im Hydraulik- oder Pneumatickreislauf überschritten wird, kann das Überdruckventil öffnen und somit ein Ausweichen des hydraulisches oder pneumatisches Antriebsmittel ermöglichen. Es kommt somit nicht zu einer mechanischen Selbsthemmung.

Das zumindest eine erste hydraulische oder pneumatische Antriebsmittel kann zumindest eine mit hydraulischem oder pneumatischem Medium füllbare Arbeitskammer aufweisen.

Ein in der ersten Arbeitskammer bewegbares Kolbenelement kann mit der ersten Zahnstange verbunden sein.

Die Zahnstange und das Kolbenelement können einstückig miteinander verbunden sein.

Die zumindest eine erste Arbeitskammer kann Teil eines Hydraulikzylinders sein.

Der erste Teil des Lenkantriebs, der mit der jeweiligen Fahreinrichtung verbunden ist, kann das zumindest eine erste lineare Antriebsmittel und die zumindest eine erste Zahnstange aufweisen und der zweite Teil des Lenkantriebs, der mit der jeweiligen Hubsäule verbunden ist, kann das jeweilige Zahnrad des Lenkantriebs aufweisen oder alternativ kann der erste Teil des Lenkantriebs, der mit der jeweiligen Fahreinrichtung verbunden ist, das zumindest eine Zahnrad aufweisen und der zweite Teil des Lenkantriebs, der mit der jeweiligen Hubsäule verbunden ist, kann das zumindest eine erste lineare Antriebsmittel und die zumindest eine erste Zahnstange des Lenkantriebs aufweisen.

Die Zahnstange kann in eine erste und in eine der ersten entgegengesetzten zweite Bewegungsrichtung bewegt werden. Dabei kann das erste lineare Antriebsmittels die Zahnstange in die erste Bewegungsrichtung und in die der ersten entgegengesetzten zweiten Bewegungsrichtung bewegen. Alternativ kann das erste lineare Antriebsmittel die Zahnstange auch nur in die erste Bewegungsrichtung bewegen. Dass das erste lineare Antriebsmitte die Zahnstange nur in die erste Bewegungsrichtung bewegt, heißt nicht, dass die Zahnstange nur in eine Bewegungsrichtung bewegbar ist. Grundsätzlich sollte vorzugsweise eine Bewegbarkeit der ersten Zahnstange in beide Bewegungsrichtungen nicht ausgeschlossen sein.

In dem Fall, dass das erste lineare Antriebsmittel die Zahnstange lediglich in die erste Bewegungsrichtung bewegt kann ein weiteres Antriebsmittel für die Bewegung in die zweite Bewegungsrichtung vorgesehen sein. Weiter unten ist beispielsweise ein zweites lineare Antriebsmittel mit einer zweiten Zahnstange beschrieben. Grundsätzlich sollte vorzugsweise eine Bewegbarkeit der ersten Zahnstange in beide Bewegungsrichtungen nicht ausgeschlossen sein.

Das zumindest eine erste hydraulische oder pneumatische Antriebsmittel kann zumindest eine mit hydraulischem oder pneumatischem Medium füllbare zweite Arbeitskammer aufweisen.

Das erste hydraulische oder pneumatische Antriebsmittel kann derart ausgestaltet sein, dass mittels der ersten Arbeitskammer die Zahnstange in die erste Bewegungsrichtung bewegbar und mittels der zweiten Arbeitskammer die Zahnstange in die entgegengesetzte zweite Bewegungsrichtung bewegbar ist.

Durch Bewegen der ersten Zahnstange in die ersten Bewegungsrichtung kann das Zahnrad in eine erste Drehrichtung drehbar sein. Durch Bewegen der ersten Zahnstange in die zweiten Bewegungsrichtung kann das Zahnrad in eine zweite Drehrichtung bewegbar sein.

Die erste und die zweite Arbeitskammer können in zwei separaten Zylindern angeordnet sein.

Alternativ können die erste und zweite Arbeitskammer in einem Zylinder angeordnet sein und in der Art eines doppelwirkenden Hydraulik- oder Pneumatikzylinders betreibbar sein.

Bei dem Ausführungsbeispiel, bei dem die erste und die zweite Arbeitskammer in zwei separaten Zylindern angeordnet sind, kann ein in der zweiten Arbeitskammer bewegbares zweites Kolbenelement vorgesehen sein. Diese in der zweiten Arbeitskammer bewegbares zweites Kolbenelement kann ebenfalls mit der ersten Zahnstange verbunden sein, wobei das zweite Kolbenelement vorzugsweise einstückig mit der ersten Zahnstange verbunden ist.

Der Lenkantrieb kann zumindest eine zweite Zahnstange aufweisen, wobei die zweite Zahnstange mittels zumindest eines zweiten linearen Antriebsmittels bewegbar ist, wobei die zweite Zahnstange vorzugsweise parallel zu der ersten Zahnstange angeordnet ist. Die zweite Zahnstange kann ebenfalls vorzugsweise in das Zahnrad eingreifen und das Zahnrad antreiben.

Alternativ kann die zweite Zahnstange, die mittels des zumindest zweiten linearen Antriebs bewegbar ist, auch in ein weiteres Zahnrad eingreifen, das mit dem ersten Zahnrad verbunden sein kann oder in Eingriff mit dem ersten Zahnrad sein kann.

Die parallel zueinander angeordneten Zahnstangen können auf entgegengesetzten Seiten des Zahnrads angeordnet sein und die Zähne der ersten und zweiten Zahnstange können einander zugewandt sein.

Die Verwendung einer ersten Zahnstange mit einem ersten linearen Antriebsmittel und einer zweiten Zahnstange mit einem zweiten linearen Antriebsmittel ist, unabhängig von der Anzahl der verwendeten Zahnräder besonders vorteilhaft, da es hierdurch ermöglicht wird die Kinematik zur Lenkwinkelverstellung jederzeit spielfrei zu halten.

Dies kann insbesondere dadurch erreicht werden, dass das erste und das zweite lineare Antriebsmittel derart angesteuert werden, dass die von der ersten Zahnstange auf das mit der ersten Zahnstange in Eingriff befindliche Zahnrad eingebrachte Kraft der Kraft entgegengerichtet ist, die von der zweiten Zahnstange auf das mit der zweiten Zahnstange in Eingriff befindliche Zahnrad eingebracht wird. Mithin wird das Zahnrad oder die die Mehrzahl von Zahnrädern tragende Baugruppe des Lenkantriebs durch gegenläufige Bewegungen der linearen Antriebsmittel verspannt und so die Spielfreiheit im Lenkantrieb gewährleistet.

Das zweite lineare Antriebsmittel kann grundsätzlich genauso ausgeführt werden wie das erste lineare Antriebsmittel. Die Beschreibungen zum ersten linearen Antriebsmittel und die genannten Vorteile gelten somit auch für das zweite lineare Antriebsmittel.

Das zweite lineare Antriebsmittel kann ein zweites hydraulisches oder pneumatisches Antriebsmittel sein.

Alternativ kann zumindest das zweite lineare Antriebsmittel auch ein elektrisches Antriebsmittel oder jegliches anderes lineare Antriebsmittel sein.

Auch bei dem zweiten lineare Antriebsmittel kann die aktuelle Lenkwinkelstellung bzw. Lenkwinkelposition und/oder Lenkgeschwindigkeit über Sensoren erfasst werden. Sie Sensoren können beispielsweise die Verstellung bzw. Verstellbewegung des linearen Antriebsmittels erfassen.

Die aktuelle Lenkwinkelstellung bzw. Lenkwinkelposition kann beispielsweise über einen Wegsensor erfasst werden, der die Verstellbewegung des linearen Antriebsmittels erfasst.

Hierzu kann die Relativposition eines beweglichen Teils des linearen Antriebsmittels relativ zu einem Anlenkpunkt des linearen Antriebsmittels erfasst und aufgrund der Geometrie der Zahnstange und des Zahnrads auf die aktuelle Lenkwinkelstellung geschlossen werden.

Alternativ kann der Zusammenhang zwischen Relativposition des beweglichen Teils des linearen Antriebsmittels relativ zu einem Anlenkpunkt des linearen Antriebsmittels und dem Lenkwinkel empirisch ermittelt werden.

Das zumindest eine zweite hydraulische oder pneumatische Antriebsmittel kann zumindest eine mit hydraulischen oder pneumatischen Medium füllbare dritte Arbeitskammer aufweisen.

Die dritte Arbeitskammer ist lediglich zur sprachlichen Abgrenzung zur ersten und zweiten Arbeitskammer die dritte Arbeitskammer, allerdings ist die dritte Arbeitskammer die erste Arbeitskammer des zweiten Antriebsmittels. Das ersten hydraulische oder pneumatische Antriebsmittel kann somit nur eine Arbeitskammer nämlich die erste Arbeitskammer aufweisen und das zweite hydraulische oder pneumatische Antriebsmittel kann ebenfalls nur eine Arbeitskammer, nämlich die dritte Arbeitskammer aufweisen. In diesem Fall kann mittels des ersten hydraulische oder pneumatische Antriebsmittels das Zahnrad in die erste Drehrichtung bewegt werden und mittels des zweiten hydraulische oder pneumatische Antriebsmittels in die zweite Drehrichtung bewegt werden.

Das zumindest eine zweite hydraulische oder pneumatische Antriebsmittel kann zusätzlich zu der dritten Arbeitskammer zumindest eine weitere mit hydraulischem und pneumatischem Medium füllbare vierte Arbeitskammer aufweisen.

Auch bei der vierten Arbeitskammer handelt es sich lediglich aus Gründen der sprachlichen Abgrenzung um die vierte Arbeitskammer. Die vierte Arbeitskammer ist eigentlich die zweite Arbeitskammer des zweiten Antriebsmittels.

Die dritte und vierte Arbeitskammer können in zwei separaten Zylindern oder in einem Zylinder angeordnet sein. Bei einer Anordnung in einem Zylinder kann der Zylinder in der Art eines doppelwirkenden Hydraulik- oder Pneumatikzylinders betreibbar sein.

Die auf entgegengesetzten Seiten angeordneten erste und zweite Zahnstange können im Betrieb stets in entgegengesetzte Bewegungsrichtung bewegbar sein.

Sofern die erste und die zweite Arbeitsstange auf der gleichen Seite des Zahnrads angeordnet sind und die zweite Zahnstange in ein weiteres parallel zu dem ersten Zahnrad angeordnet weiteres Zahnrad eingreift, so können die erste und die zweite Zahnstange auch jeweils in die gleiche Bewegungsrichtung bewegbar sein.

Dabei sollte jedoch vorzugsweise, wie oben beschrieben, eine Bewegbarkeit der ersten und zweiten Zahnstange in beide Bewegungsrichtungen nicht ausgeschlossen sein, um eine Spielfreiheit im Lenkantrieb zu gewährleisten.

Der erste und der zweite Teil des Lenkantriebs können um wenigstens 180°, bevorzugt wenigstens 220°, besonders bevorzugt mindestens 270 ° zueinander verdrehbar sein.

Erfindungsgemäß kann eine selbstfahrende Baumaschine nach Anspruch 1 vorgesehen sein, die 4 Fahreinrichtungen und eine Steuereinrichtung zum Steuern der jeweiligen Lenkantriebe der Fahreinrichtungen aufweist.

Bei der Steuereinrichtung können unterschiedliche Lenkmodi einstellbar sein. Die Lenkantriebe können abhängig von den unterschiedlichen Lenkmodi steuerbar sein. In den unterschiedlichen Lenkmodi können die Lenkantriebe vorzugsweise aufeinander abgestimmt lenkbar sein.

Bei der Steuereinrichtung können beispielsweise folgende Lenkmodi einstellbar sein:
∘ Lenkmodus "Vorderradlenkung", wobei die beiden vordere Fahreinrichtungen ähnlich wie bei einer Vorderradlenkung eines Autos koordiniert werden können,
∘ Lenkmodus "Vierradlenkung", wobei alle vier Fahreinrichtungen gemäß der Ackermann Bedingung koordiniert werden können,
∘ Lenkmodus "Krebsgang", wobei alle Fahreinrichtungen mit gleicher Lenkwinkel mit gleichem Betrag in gleicher Richtung eingestellt werden,
∘ Lenkmodus "Transportfahrt", bei dem alle Fahreinrichtungen 90° zur Arbeitsrichtung eingestellt werden zur Transportfahrt in Maschinenlängsrichtung
∘ Lenkmodus "Schwenken über Lenken", bei der die Fahreinrichtungen mittels der Steuereinrichtung so koordiniert gelenkt werden wie in der EP 2 955 272 A1 beschrieben.
∘ Lenkmodus "Teleskopieren über Lenken" bei der die Fahreinrichtungen mittels der Steuereinrichtung so koordiniert gelenkt werden wie in der EP 2 955 273 A1 beschrieben.

Im Folgenden wird unter Bezugnahme auf die Zeichnungen ein Ausführungsbeispiel der Erfindung näher erläutert.

Es zeigen schematisch:
- Fig. 1: eine selbstfahrende Baumaschine,
- Fig. 2: eine erste Ansicht auf den Lenkantrieb,
- Fig. 3: eine weitere Ansicht auf den Lenkantrieb,
- Fig. 4: einen Hydraulikplan des Ausführungsbeispiels nach Fign. 2 und 3,
- Fig. 5: einen doppelwirkender Hydraulikzylinder,
- Fig. 6: eine Seitenansicht auf den Lenkantrieb im eingebauten Zustand,
- Fig. 7: zeigt einen weiteren Hydraulikplan eines Ausführungsbeispiels,
- Fig.8: zeigt einen weiteren Hydraulikplan eines Ausführungsbeispiels,
- Fig.9: zeigt einen weiteren Hydraulikplan eines Ausführungsbeispiels,
- Fig. 10: zeigt eine selbstfahrende Baumaschine 1, die 4 Fahreinrichtungen aufweist.

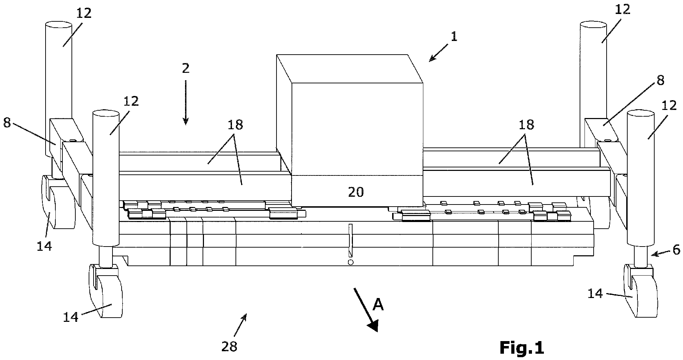

Fig. 1 zeigt eine selbstfahrende Baumaschine 1. Im dargestellten Ausführungsbeispiel ist die selbstfahrende Baumaschine 1 ein Gleitschalungsfertiger. Die dargestellte Baumaschine 1 weist einen Maschinenrahmen 2 und zumindest drei Fahreinrichtungen 14 auf. Die Fahreinrichtungen 14 können Kettenlaufwerke oder Räder sein. Die dargestellte Baumaschine 1 weist vier Fahreinrichtung 14 auf von denen eine jedoch aufgrund der Perspektive in Figur 1 nicht erkennbar ist.

Der Maschinenrahmen 2 weist parallel zur Arbeitsrichtung A verlaufende Längsträger 8 und quer zur Arbeitsrichtung A verlaufende Querträger 18 auf. Die Querträger 18 können wie im dargestellt Ausführungsbeispiel gezeigt teleskopierbar sein. Die teleskopierbaren quer zur Arbeitsrichtung A verlaufenden Querträger 18 können die Arbeitsbreite der als Gleitschalungsfertiger ausgebildete Baumaschine 1 einstellen. Die Querträger 18 können an einem Grundrahmen 20 gelagert sein.

An den vorderen und hinteren Enden der Längsträger 8 können Fahreinrichtungen 14 jeweils über Hubsäulen 12 mit dem Maschinenrahmen 2 verbunden sein und ferner kann unterhalb des Grundrahmens 20 eine Muldeneinrichtung 28 angeordnet sein.

Die selbstfahrende Baumaschine 1 muss jedoch nicht die Form eines Gleitschalungsfertigers aufweisen, sondern kann auch die Form einer Straßenfräsmaschine oder Surface-Miner, oder Stabilisierer oder Recycler aufweisen. Es müssen nur jeweils Lenkantriebe für die Fahreinrichtungen 14 vorgesehen sein.

Bei dem dargestellten Ausführungsbeispiel können zumindest zwei Fahreinrichtungen 14 mittels jeweils eines Lenkantriebs 6 lenkbar sein, wobei der jeweilige Lenkantrieb 6 zumindest einen ersten Teil 10 aufweist, der mit der jeweiligen Fahreinrichtung 14 verbunden ist, und einen zweiten Teil 16, der mit der jeweiligen Hubsäule 12 verbunden ist.

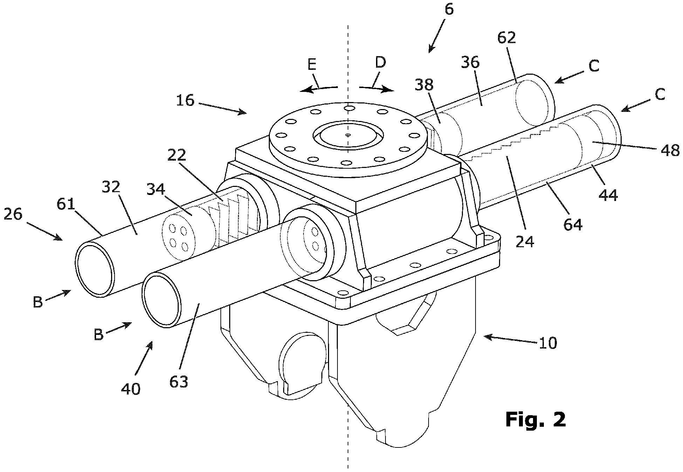

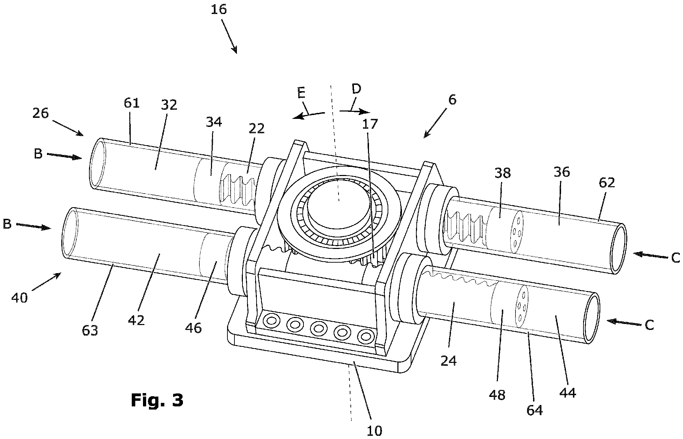

Fign. 2 und 3 zeigen einen Lenkantrieb 6. Der Lenkantrieb 6 weist einen ersten Teil 10 auf, der mit der jeweiligen Fahreinrichtung 14 verbunden ist und einen zweiten Teil 16 auf, der mit der jeweiligen Hubsäule 12 verbunden ist.

Der Lenkantrieb 6 weist zumindest eine erste Zahnstange 22 auf, die mittels zumindest eines ersten linearen Antriebsmittels 26 bewegbar ist. Die Zähne der zumindest einen Zahnstange 22 greift in Zähne zumindest eines Zahnrads 17 ein, so dass das Zahnrad 17 mittels der Bewegung der Zahnstange 22 drehbar ist.

Durch Bewegung der Zahnstange 22 mittels des zumindest einen ersten linearen Antriebsmittels 26 kann somit das Zahnrad 17 gedreht werden und die Fahreinrichtung 14 in Bezug auf die Hubsäule 12 gedreht bzw. gelenkt werden. Die Drehung des Zahnrades 17 ist eine relative Drehung relativ zu dem ersten Teil 10 und der jeweilige Fahreinrichtung 14. Im Ausführungsbeispiel dreht sich die Fahreinrichtung 14 relativ zu dem Zahnrad 17 und damit relativ zu der jeweiligen Hubsäule 12.

Das dargestellte erste lineare Antriebsmittel 26 ist ein erstes hydraulisches Antriebsmittel.

Das erste lineare Antriebsmittel 26 kann die erste Zahnstange 22 in eine erste Bewegungsrichtung B und in eine der ersten entgegengesetzten zweiten Bewegungsrichtung C bewegen,

Alternativ könnte das erste lineare Antriebsmittel 26 auch ein pneumatisches oder auch ein elektrisches Antriebsmittel sein.

Das zumindest eine erste hydraulische Antriebsmittel 26 weist zumindest eine mit hydraulischem Medium füllbare erste Arbeitskammer 32 auf. In der ersten Arbeitskammer 32 ist ein mit der ersten Zahnstange 22 verbundenes in der Arbeitskammer 32 bewegbares Kolbenelement 34 angeordnet. Durch Einführen des hydraulischen Mediums in die Arbeitskammer 32 wird das Kolbenelement 34 bewegt und damit die erste Zahnstange 22 in die erste Bewegungsrichtung B bewegt. Das erste hydraulische Antriebsmittel 26 weist ferner eine zweite hydraulische Arbeitskammer 36 auf. In der zweiten Arbeitskammer 36 ist ebenfalls ein bewegbares zweites Kolbenelement 38 angeordnet, das mit dem anderen Ende der Zahnstange 22 verbunden ist. Auch durch Einfüllen eines hydraulischen Arbeitsmittels in die zweite Arbeitskammer kann das Kolbenelement 38 und damit die Zahnstange 22 in die zweite Bewegungsrichtung C bewegt werden.

Die erste und zweite Arbeitskammer 32, 36 sind im dargestellten Ausführungsbeispiel in zwei separaten Zylindern 61, 62 angeordnet.

Im vorliegenden Ausführungsbeispiel ist zusätzlich zu dem ersten linearen Antriebsmittel 26 noch ein zweites lineares Antriebsmittel 40 vorgesehen.

Dieses zweite lineare Antriebsmittel 40 ist im vorliegenden Fall ebenfalls ein zweites hydraulisches Antriebsmittel, das eine zweite Zahnstange 24 bewegen kann. Die zweite Zahnstange 24 ist vorzugsweise parallel zu der ersten Zahnstange 22 angeordnet und die zweite Zahnstange 24 greift ebenfalls in das Zahnrad 17 ein. Im dargestellten Ausführungsbeispiel ist die zweite Zahnstange 24 auf der gegenüberliegenden Seite angeordnet und die Zähne der ersten Zahnstange 22 und der zweiten Zahnstange 24 sind vorzugsweise einander zugewandt.

Alternativ könnte auch ein weiteres Zahnrad vorgesehen sein, das parallel zu dem ersten Zahnrad 17 angeordnet ist und mit der Drehachse verbunden ist. In diesem Fall könnte die zweite Zahnstange mit den Zähnen in das zweite Zahnrad eingreifen und die zweite Zahnstange könnte auch auf der gleichen Seite wie die erste Zahnstange angeordnet sein.

Das zweite hydraulische Antriebsmittel 40 weist eine dritte Arbeitskammer 42 und eine vierte Arbeitskammer 44 auf. In der dritten Arbeitskammer 42 ist ein Kolbenelement 46 angeordnet, das mit einem ersten Ende der zweiten Zahnstange 24 verbunden ist. In der vierten Arbeitskammer 44 ist ein Kolbenelement 48 angeordnet, das mit dem zweiten Ende der zweiten Zahnstange 24 verbunden ist. Durch Einfüllen eines hydraulischen Mediums in die dritte Kammer 42 oder die vierte Kammer 44 kann die zweite Zahnstange 24 in eine erste Bewegungsrichtung B oder in eine der ersten entgegengesetzte zweite Bewegungsrichtung C bewegt werden.

Die dritte und vierte Arbeitskammer 42, 44 sind im dargestellten Ausführungsbeispiel in zwei separaten Zylindern 63, 64 angeordnet.

In Fig. 3 ist das Zahnrad 17 zu erkennen und das Eingreifen der ersten und zweiten Zahnstange 22, 24 in das Zahnrad.

Durch Bewegen der ersten Zahnstange 22 in die erste Bewegungsrichtung B kann das Zahnrad 17 in die erste Drehrichtung D gedreht werden. Durch Bewegen der ersten Zahnstange 22 in die zweite Bewegungsrichtung C kann das Zahnrad 17 in die der ersten Drehrichtung D entgegengesetzte zweite Drehrichtung E gedreht werden.

Durch Bewegen der zweiten Zahnstange 24 in die erste Bewegungsrichtung B kann das Zahnrad 17 in die zweite Drehrichtung E gedreht werden. Durch Bewegen der zweiten Zahnstange 24 in die zweite Bewegungsrichtung C kann das Zahnrad 17 in die ersten Drehrichtung D gedreht werden.

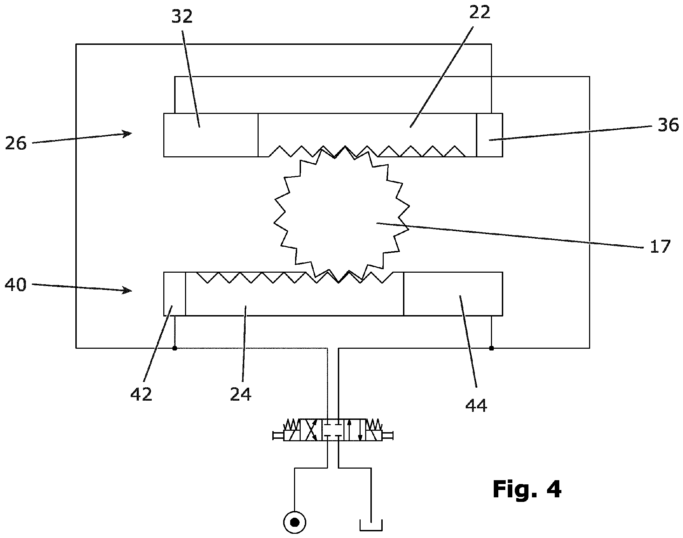

In Fig. 4 ist ein Hydraulikplan des Ausführungsbeispiels nach Fign. 2 und 3 zeigt. Es ist zu erkennen, dass das hydraulische Antriebsmittel entweder in die erste und vierte Arbeitskammer eingeführt wird oder in die zweite und dritte Arbeitskammer.

Alternativ kann das erste hydraulische Antriebsmittel und/oder das zweite hydraulische Antriebsmittel auch derart aufgebaut sein, dass die erste und die zweite Arbeitskammer oder auch die dritte und vierte Arbeitskammer jeweils in einem Zylinder angeordnet sind. In diesem Fall würde das erst und/oder zweite hydraulische Antriebsmittel jeweils als doppelwirkende Hydraulikzylinder arbeiten.

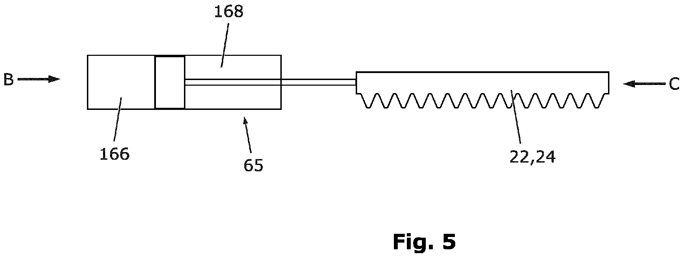

Ein entsprechender schematischer doppelwirkender Hydraulikzylinder 65 ist in Fig. 5 gezeigt. In diesem Fall ist die Kolbenstange mit entweder der ersten Zahnstange 22 oder der zweiten Zahnstange 24 verbunden. Es handelt sich dabei lediglich um eine rein schematische Darstellung. Die jeweilige Zahnstange 22 bzw. 24 würde dann entsprechend wie in Fign. 2 oder 3 dargestellt in das Zahnrad 17 eingreifen. Durch Befüllen einer ersten Kammer 166 des doppeltwirkenden Hydraulikzylinders mit hydraulischem Medium wird die Kolbenstange 22,24 in die erste Bewegungsrichtung B bewegt, durch Befüllen der zweiten Kammer 168 des doppeltwirkenden Hydraulikzylinders wird die Kolbenstange in die zweite Bewegungsrichtung C bewegt.

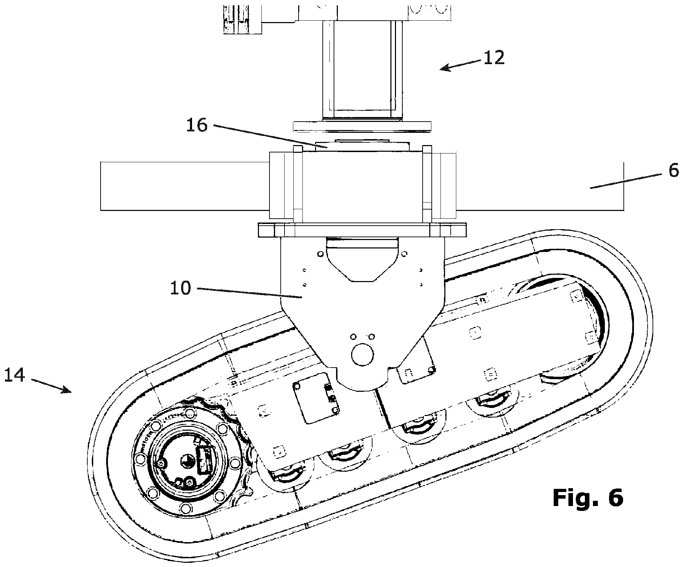

In Fig. 6 ist noch einmal dargestellt, wie der Lenkantrieb 6 mit dem zweiten Teil 16 mit der Hubsäule 12 verbunden ist.

In Fig. 6 ist allerdings ein Abstand zwischen dem zweiten Teil 16 und der Hubsäule 12 dargestellt. Dies ist jedoch lediglich zur übersichtlichen Darstellung erfolgt. In der tatsächlichen Ausführungsform wäre natürlich kein Abstand vorhanden und der zweite Teil 16 wäre direkt mit der Hubsäule 12 verbunden. Der erste Teil 10 ist mit der Fahreinrichtung 14 verbunden. Der Lenkantrieb 6 könnte jedoch auch genau andersherum eingebaut und befestigt werden, so dass der erste Teil des Lenkantriebs, der mit der jeweiligen Fahreinrichtung verbunden ist, das zumindest eine Zahnrad 17 aufweist und der zweite Teil 16 des Lenkantriebs 6, der mit der jeweiligen Hubsäule 12 verbunden ist, das zumindest eine erste lineare Antriebsmittel 26 und die zumindest eine erste Zahnstange 22 und, wenn vorhanden, auch das zweite Antriebsmittel 40 und die zweite Zahnstange 24 aufweisen.

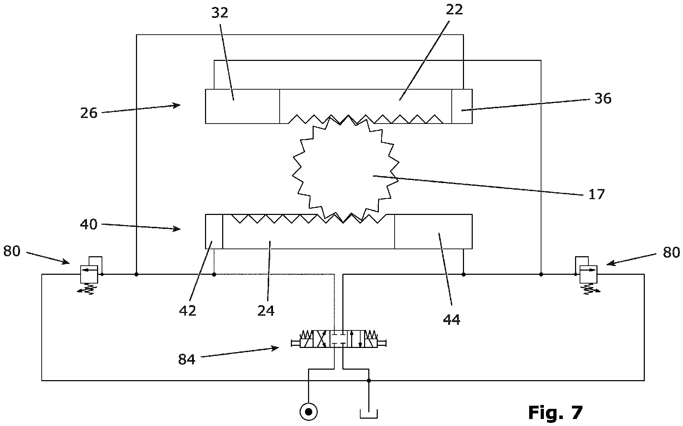

Fig. 7 zeigt einen weiteren Hydraulikplan. Dieser unterscheidet sich von dem aus Fig. 4, dadurch, dass Druckbegrenzungsventile 80 als Überlastschutz vorgesehen. Wenn der Druck zu sehr ansteigt, weil beispielsweise eine Fahreinrichtung seitlich gegen einen Bordstein fährt

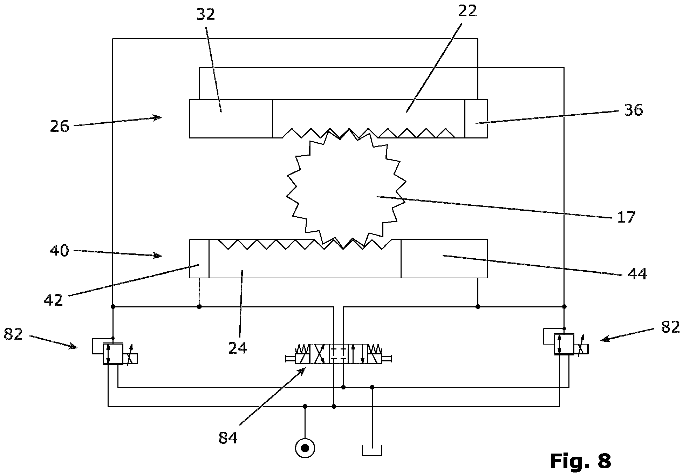

Fig. 8 zeigt einen weiteren Hydraulikplan. Dieser unterscheidet sich von dem aus Fig. 4 dadurch, dass Druckreduzierventile 82 vorgesehen sind. Druckreduzierventile sind elektrisch proportional verstellbar. Die Druckreduzierventile 82 ermöglichen durch unterschiedliche Ansteuerung auf den beiden Seiten das Einstellen eines Druckunterschieds zwischen den beiden Seiten. So kann bewerkstelligt werden, dass die von der ersten Zahnstange 22 auf das mit der ersten Zahnstange 22 in Eingriff befindliche Zahnrad 17 eingebrachte Kraft der Kraft entgegengerichtet ist, die von der zweiten Zahnstange 24 auf das Zahnrad 17 eingebracht wird. Mithin wird das Zahnrad 17 des Lenkantriebs durch gegenläufige Bewegungen verspannt und so die Spielfreiheit im Lenkantrieb gewährleistet.

Die Lenkbewegung wird jedoch im vorliegenden Ausführungsbeispiel im Wesentlichen durch das Wegeventil 84 gesteuert.

Die Druckreduzierventile 82 können zudem auch als Druckbegrenzungsventile dienen und ermöglichen ein Ausweichen bei Überschreiten einer Maximalkraft ähnlich wie die Druckbegrenzungsventile 80 aus Fig. 7.

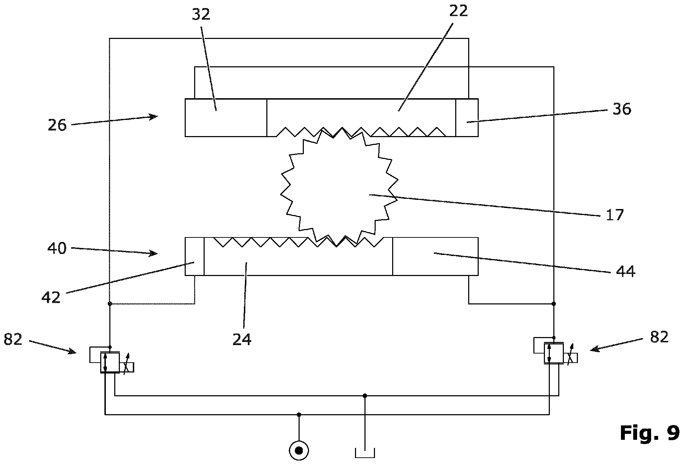

Fig. 9 zeigt ein Ausführungsbeispiel, das dem aus Fig. 8 ähnlich ist, jedoch mit dem Unterschied, dass kein Wegeventil 84 vorgesehen ist. In diesem Fall wird die Lenkbewegung auch über die Druckreduzierventile 82 gesteuert.

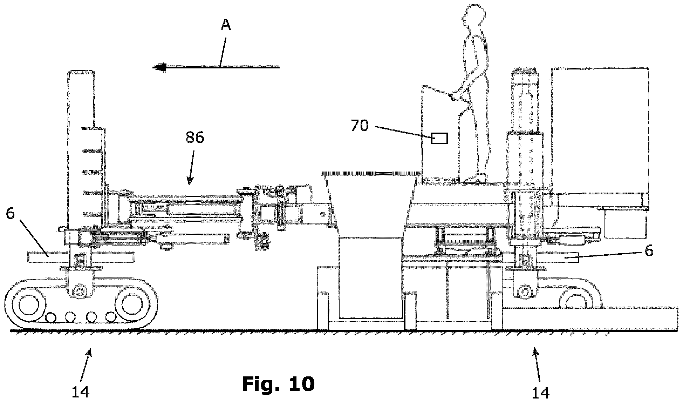

Fig. 10 zeigt eine selbstfahrende Baumaschine 1, die 4 Fahreinrichtungen 14 und eine Steuereinrichtung 70 zum Steuern der jeweiligen Lenkantriebe 6 der Fahreinrichtungen 14 aufweist.

Bei der Steuereinrichtung 70 können unterschiedliche Lenkmodi einstellbar sein. Die Lenkantriebe 6 können abhängig von den unterschiedlichen Lenkmodi steuerbar sein. In den unterschiedlichen Lenkmodi können die Lenkantriebe 6 vorzugsweise aufeinander abgestimmt lenkbar sein.

Bei der Steuereinrichtung 70 können beispielsweise folgende Lenkmodi einstellbar sein:
∘ Lenkmodus "Vorderradlenkung", wobei die beiden vordere Fahreinrichtungen 14 ähnlich wie bei einer Vorderradlenkung eines Autos koordiniert werden können,
∘ Lenkmodus "Vierradlenkung", wobei alle vier Fahreinrichtungen 14 gemäß der Ackermann Bedingung koordiniert werden können,
∘ Lenkmodus "Krebsgang", wobei alle Fahreinrichtungen 14 mit gleichem Lenkwinkel mit gleichem Betrag in gleicher Richtung eingestellt werden,
∘ Lenkmodus "Transportfahrt", bei dem alle Fahreinrichtungen 14 90° zur Arbeitsrichtung A eingestellt werden zur Transportfahrt in Maschinenlängsrichtung
∘ Lenkmodus "Schwenken über Lenken", bei der die Fahreinrichtungen mittels der Steuereinrichtung 70 so koordiniert gelenkt werden wie in der EP 2 955 272 A1 beschrieben.
∘ Lenkmodus "Teleskopieren über Lenken" bei der die Fahreinrichtungen mittels der Steuereinrichtung 70 so koordiniert gelenkt werden wie in der EP 2 955 273 A1 beschrieben.

Bei dem Lenkmodus "Schwenken über Lenken", werden die Fahreinrichtungen mittels der Steuereinrichtung 70 so koordiniert gelenkt, um zu ermöglichen, dass sich jedes der Schwenkbeine 86 in Reaktion auf ein Lenken der Fahreinrichtungen 14 mit dem jeweiligen Lenkantrieb 6 relativ zu dem Maschinenrah-men dreht, während die Maschine von den Fahreinrichtungen 14 über die Bodenfläche gefahren wird.

Bei dem Lenkmodus "Teleskopieren über Lenken" kann grundsätzlich ein Maschinenrahmen verwendet werden, der seitlich ausfahrbar ist. Ferner kann eine Rahmenverriegelung vorgesehen sein, die zum selektiven Verriegeln und Entriegeln des Maschinenrahmens ausgebildet ist, derart, dass der Maschinenrahmen bei verriegelter Rahmenverriegelung nicht seitlich ausfahrbar ist und der Maschinenrahmen bei entriegelter Rahmenverriegelung seitlich ausfahrbar ist. In dem Fall einer entriegelten Rahmenverriegelung können die Fahreinrichtungen mittels der Steuereinrichtung 70 derart so koordiniert gelenkt werden um zu ermöglichen, dass das Lenken mindestens eines der Fahreinrichtungen eine seitliche Kraft zum Verstellen der Breite des Maschinenrahmens bereitstellt, während die Baumaschine mittels der Fahreinrichtungen 14a, 14b bei entriegelter Rahmenverriegelung über die Bodenfläche bewegt wird.

## Patentansprüche

1. Selbstfahrende Baumaschine (1), insbesondere Gleitschalungsfertiger, mit
einem Maschinenrahmen (2),
zumindest drei Fahreinrichtungen (14),
wobei die Fahreinrichtungen (14) jeweils über Hubsäulen (12) mit dem Maschinenrahmen (2) verbunden sind,
wobei zumindest zumindest eine der zumindest drei Fahreinrichtungen (14) mittels jeweils eines Lenkantriebs (6) lenkbar sind, wobei der jeweilige Lenkantrieb (6) zumindest einen ersten Teil (10) aufweist, der mit der jeweiligen Fahreinrichtung (14) verbunden ist, und einen zweiten Teil (16) aufweist, der mit der jeweiligen Hubsäule (12) verbunden ist,
**dadurch gekennzeichnet,**
**dass** der Lenkantrieb (6) zumindest eine erste Zahnstange (22) aufweist, wobei die erste Zahnstange mittels zumindest eines ersten linearen Antriebsmittels (26) bewegbar ist, wobei Zähne der zumindest einen Zahnstange in Zähne zumindest eines Zahnrads (17) eingreifen und so mittels der Bewegung der Zahnstange das Zahnrad drehbar ist.

2. Selbstfahrende Baumaschine nach Anspruch 1, **dadurch gekennzeichnet, dass** das erste lineare Antriebsmittel (26) ein erstes hydraulisches oder pneumatisches Antriebsmittel ist und vorzugsweise zumindest eine mit hydraulischen oder pneumatischen Medium füllbare erste Arbeitskammer (32) aufweist.

3. Selbstfahrende Baumaschine nach Anspruch 2, **dadurch gekennzeichnet, dass** ein in der ersten Arbeitskammer (32) bewegbares Kolbenelement (34) mit der ersten Zahnstange (22) verbunden ist.

4. Selbstfahrende Baumaschine nach einem der Ansprüche 1 bis 3, **dadurch gekennzeichnet, dass**
- der erste Teil (10) des Lenkantriebs (6), der mit der jeweiligen Fahreinrichtung (14) verbunden ist, das zumindest eine erste lineare Antriebsmittel (26) und die zumindest eine erste Zahnstange (22) aufweist und der zweite Teil (16) des Lenkantriebs (6), der mit der jeweiligen Hubsäule (12) verbunden ist, das jeweilige Zahnrad (17) des Lenkantriebs (6) aufweist oder
- dass der erste Teil (10) des Lenkantriebs (6), der mit der jeweiligen Fahreinrichtung (14) verbunden ist, das zumindest eine Zahnrad (17) aufweist und der zweite Teil (16) des Lenkantriebs (6), der mit der jeweiligen Hubsäule (12) verbunden ist, das zumindest eine erste lineare Antriebsmittel (26) und die zumindest eine erste Zahnstangen (22) des Lenkantriebs (6) aufweist.

5. Selbstfahrende Baumaschine nach Anspruch 1 bis 4, **dadurch gekennzeichnet, dass** die Zahnstange (22) mittels des ersten linearen Antriebsmittels (26) in die erste Bewegungsrichtung (B) und in eine der ersten entgegengesetzte zweite Bewegungsrichtung (C) bewegbar ist.

6. Selbstfahrende Baumaschine nach einem der Ansprüche 2 bis 5, **dadurch gekennzeichnet, dass** das zumindest eine erste hydraulische oder pneumatische Antriebsmittel (26) zumindest eine mit hydraulischen oder pneumatischen Medium füllbare zweite Arbeitskammer (36) aufweist.

7. Selbstfahrende Baumaschine nach Anspruch 6, **dadurch gekennzeichnet, dass** die erste und zweite Arbeitskammer (32, 36) in zwei separaten Zylindern (61, 62, 63, 64) angeordnet sind.

8. Selbstfahrende Baumaschine nach Anspruch 6, **dadurch gekennzeichnet, dass** die ersten und zweite Arbeitskammer in einem Zylinder (65) angeordnet sind und in der Art eines doppelwirkenden Hydraulik- oder Pneumatikzylinders betreibbar ist.

9. Selbstfahrende Baumaschine nach Anspruch 7, **dadurch gekennzeichnet, dass** ein in der zweiten Arbeitskammer bewegbares zweites Kolbenelement (36) mit der ersten Zahnstange (22) verbunden ist, wobei das zweite Kolbenelement (36) vorzugsweise einstückig mit der ersten Zahnstange (22) verbunden ist.

10. Selbstfahrende Baumaschine nach einem der vorherigen Ansprüche 1 bis 9, **dadurch gekennzeichnet, dass** der Lenkantrieb (6) zumindest eine zweite Zahnstange (24) aufweist, wobei die zweite Zahnstange (24) mittels zumindest eines zweiten linearen Antriebsmittels (40) bewegbar ist, wobei die zweite Zahnstange (24) vorzugsweise parallel zu der ersten Zahnstange (22) angeordnet ist und wobei die Zähne der zweite Zahnstange (24) ebenfalls in Zähne des Zahnrads eingreift und das Zahnrad antreibt.

11. Selbstfahrende Baumaschine nach Anspruch 10, **dadurch gekennzeichnet, dass** die parallel zueinander angeordneten Zahnstangen (22, 24) auf entgegengesetzten Seiten des Zahnrades angeordnet sind und die Zähne der ersten und der zweiten Zahnstangen einander zugewandt sind.

12. Selbstfahrende Baumaschine nach Anspruch 10 oder 11, **dadurch gekennzeichnet, dass** das zweite lineare Antriebsmittel (40) ein zweites hydraulisches oder pneumatisches Antriebsmittel ist und vorzugsweise zumindest eine mit hydraulischen oder pneumatischen Medium füllbare dritte Arbeitskammer (42) aufweist.

13. Selbstfahrende Baumaschine nach einem der Anspruch 12, **dadurch gekennzeichnet, dass** das zumindest eine zweite hydraulische oder pneumatische Antriebsmittel (40) zusätzlich zu der dritten Arbeitskammer (42) zumindest eine weitere mit hydraulischen oder pneumatischen Medium füllbare vierte Arbeitskammer (44) aufweist.

14. Selbstfahrende Baumaschine nach Anspruch 13, **dadurch gekennzeichnet, dass** die dritte und vierte Arbeitskammer (40, 42) in zwei separaten Zylindern oder in einem Zylinder (65) angeordnet sind, wobei bei einer Anordnung in einem Zylinder, der Zylinder in der Art eines doppelwirkenden Hydraulik- oder Pneumatikzylinders betreibbar ist.

15. Selbstfahrende Baumaschine nach einem der Ansprüche 1 bis 14, **dadurch gekennzeichnet, dass** an dem ersten und/oder zweiten lineare Antriebsmittel zumindest ein Sensor angeordnet ist, mittels dem die die aktuelle Lenkwinkelstellung bzw. Lenkwinkelposition und/oder Lenkgeschwindigkeit der jeweiligen Fahreinrichtung erfassbar ist.

16. Selbstfahrende Baumaschine nach Anspruch 15, **dadurch gekennzeichnet, dass** der zumindest eine Sensor ein Wegsensor ist, mit dem die Verstellbewegung des ersten und/oder zweiten linearen Antriebsmittels erfassbar ist.

## Claims

1. Self-propelled construction machine (1), in particular slipform paving machine, comprising
a machine frame (2),
at least three travelling devices (14),
wherein the travelling devices (14) are each connected to the machine frame (2) by means of lifting columns (12),
wherein at least one of the at least three travelling devices (14) is steerable by means of one each steering drive (6), wherein the respective steering drive (6) comprises at least one first part (10), which is connected to the respective travelling device (14), and one second part (16), which is connected to the respective lifting column (12).
**characterized in that**
the steering drive (6) comprises at least one first toothed rack (22), wherein the first toothed rack is movable by means of at least one first linear drive means (26), wherein teeth of the at least one toothed rack engage with teeth of at least one toothed wheel (17), and the toothed wheel is thus rotatable by means of the movement of the toothed rack.

2. Self-propelled construction machine in accordance with claim 1, **characterized in that** the first linear drive means (26) is a first hydraulic or pneumatic drive means and preferably comprises at least one first working chamber (32) fillable with hydraulic or pneumatic medium.

3. Self-propelled construction machine in accordance with claim 2, **characterized in that** a piston element (34) movable in the first working chamber (32) is connected to the first toothed rack (22).

4. Self-propelled construction machine in accordance with one of the claims 1 to 3, **characterized in that**
- the first part (10) of the steering drive (6), which is connected to the respective travelling device (14), comprises the at least one first linear drive means (26) and the at least one first toothed rack (22), and the second part (16) of the steering drive (6), which is connected to the respective lifting column (12), comprises the respective toothed wheel (17) of the steering drive (6), or
- the first part (10) of the steering drive (6), which is connected to the respective travelling device (14), comprises the at least one toothed wheel (17), and the second part (16) of the steering drive (6), which is connected to the respective lifting column (12), comprises the at least one first linear drive means (26) and the at least one first toothed rack (22) of the steering drive (6).

5. Self-propelled construction machine in accordance with claim 1 to 4, **characterized in that** the toothed rack (22) is movable, by means of the first linear drive means (26), in the first direction of movement (B) and in a second direction of movement (C) opposite to the first.

6. Self-propelled construction machine in accordance with one of the claims 2 to 5, **characterized in that** the at least one first hydraulic or pneumatic drive means (26) comprises at least one second working chamber (36) fillable with hydraulic or pneumatic medium.

7. Self-propelled construction machine in accordance with claim 6, **characterized in that** the first and second working chambers (32, 36) are arranged in two separate cylinders (61, 62, 63, 64).

8. Self-propelled construction machine in accordance with claim 6, **characterized in that** the first and second working chambers are arranged in a single cylinder (65) and are operatable in the manner of a double-acting hydraulic or pneumatic cylinder.

9. Self-propelled construction machine in accordance with claim 7, **characterized in that** a second piston element (36) movable in the second working chamber is connected to the first toothed rack (22), wherein the second piston element (36) is preferably integrally connected to the first toothed rack (22).

10. Self-propelled construction machine in accordance with one of the previous claims 1 to 9, **characterized in that** the steering drive (6) comprises at least one second toothed rack (24), wherein the second toothed rack (24) is movable by means of at least one second linear drive means (40), wherein the second toothed rack (24) is preferably arranged parallel to the first toothed rack (22), and wherein the teeth of the second toothed rack (24) likewise engage with teeth of the toothed wheel and drive the toothed wheel.

11. Self-propelled construction machine in accordance with claim 10, **characterized in that** the toothed racks (22, 24) arranged parallel to one another are arranged on opposite sides of the toothed wheel, and the teeth of the first and the second toothed racks are facing each other.

12. Self-propelled construction machine in accordance with claim 10 or 11, **characterized in that** the second linear drive means (40) is a second hydraulic or pneumatic drive means and preferably comprises at least one third working chamber (42) fillable with hydraulic or pneumatic medium.

13. Self-propelled construction machine in accordance with claim 12, **characterized in that** the at least one second hydraulic or pneumatic drive means (40), in addition to the third working chamber (42), comprises at least one further fourth working chamber (44) fillable with hydraulic or pneumatic medium.

14. Self-propelled construction machine in accordance with claim 13, **characterized in that** the third and fourth working chambers (40, 42) are arranged in two separate cylinders or in a single cylinder (65), wherein, in the case of an arrangement in a single cylinder, the cylinder is operatable in the manner of a double-acting hydraulic or pneumatic cylinder.

15. Self-propelled construction machine in accordance with one of the claims 1 to 14, **characterized in that** at least one sensor is arranged on the first and/or second linear drive means, by means of which the current steering angle setting or steering angle position, respectively, and/or the steering speed of the respective travelling device is detectable.

16. Self-propelled construction machine in accordance with claim 15, **characterized in that** the at least one sensor is a displacement sensor, by means of which the adjusting movement of the first and/or second linear drive means is detectable.

## Revendications

1. Engin de chantier automoteur (1), en particulier finisseur à coffrages glissants, doté d'un châssis de machine (2),
d'au moins trois dispositifs de conduite (14),
dans lequel les dispositifs de conduite (14) sont respectivement reliés au châssis de machine (2) par le biais de colonnes de levage (12),
dans lequel au moins un des au moins trois dispositifs de conduite (14) peut être dirigé respectivement au moyen d'une direction assistée (6), dans lequel la direction assistée respective (6) comporte au moins une première pièce (10), laquelle est reliée au dispositif de conduite respectif (14), et comporte une deuxième pièce (16), laquelle est reliée à la colonne de levage respective (12),
**caractérisé**
**en ce que** la direction assistée (6) comporte au moins une première crémaillère (22),
dans lequel la première crémaillère peut être déplacée au moyen d'au moins un premier moyen d'entraînement linéaire (26), dans lequel les dents de la au moins une crémaillère entrent en prise avec les dents de la au moins une roue dentée (17) et la roue dentée peut ainsi être mise en rotation au moyen du déplacement de la crémaillère.

2. Engin de chantier automoteur selon la revendication 1, **caractérisé en ce que** le premier moyen d'entraînement linéaire (26) est un premier moyen d'entraînement hydraulique ou pneumatique et comporte de préférence au moins une première chambre de travail (32) pouvant être remplie d'un milieu hydraulique ou pneumatique.

3. Engin de chantier automoteur selon la revendication 2, **caractérisé en ce qu'**un élément de piston (34) mobile dans la première chambre de travail (32) est relié à la première crémaillère (22).

4. Engin de chantier automoteur selon l'une des revendications 1 à 3, **caractérisé**
- **en ce que** la première pièce (10) de la direction assistée (6), reliée au dispositif de conduite (14) respectif, comporte l'au moins un premier moyen d'entraînement linéaire (26) et l'au moins une première crémaillère (22) et la deuxième pièce (16) de la direction assistée (6), reliée à la colonne de levage (12) respective, comporte la roue dentée respective (17) de la direction assistée (6), ou
- **en ce que** la première pièce (10) de la direction assistée (6), reliée au dispositif de conduite (14) respectif, comporte l'au moins une roue dentée (17) et la deuxième pièce (16) de la direction assistée (6), reliée à la colonne de levage (12) respective, comporte l'au moins un premier moyen d'entraînement linéaire (26) et l'au moins une première crémaillère (22) de la direction assistée (6).

5. Engin de chantier automoteur selon l'une des revendications 1 à 4, **caractérisé en ce que** la crémaillère (22) peut être déplacée au moyen du premier moyen d'entraînement linéaire (26) dans la première direction de déplacement (B) et dans une deuxième direction de déplacement (C) opposée à la première.

6. Engin de chantier automoteur selon l'une des revendications 2 à 5, **caractérisé en ce que** l'au moins un premier moyen d'entraînement hydraulique ou pneumatique (26) comporte au moins une deuxième chambre de travail (36) pouvant être remplie d'un milieu hydraulique ou pneumatique.

7. Engin de chantier automoteur selon la revendication 6, **caractérisé en ce que** la première et la deuxième chambre de travail (32, 36) sont disposées dans deux cylindres séparés (61, 62, 63, 64).

8. Engin de chantier automoteur selon la revendication 6, **caractérisé en ce que** la première et la deuxième chambre de travail sont disposées dans un cylindre (65) qui peut être utilisé à la manière d'un cylindre hydraulique ou pneumatique à double effet.

9. Engin de chantier automoteur selon la revendication 7, **caractérisé en ce qu'**un deuxième élément de piston (36) mobile dans la deuxième chambre de travail est relié à la première crémaillère (22), dans lequel le deuxième élément de piston (36) est de préférence relié d'une seule pièce à la première crémaillère (22).

10. Engin de chantier automoteur selon l'une des revendications précédentes 1 à 9, **caractérisé en ce que** la direction assistée (6) comporte au moins une deuxième crémaillère (24), dans lequel la deuxième crémaillère (24) peut être déplacée au moyen d'au moins un deuxième moyen d'entraînement linéaire (40), dans lequel la deuxième crémaillère (24) est de préférence disposée parallèlement à la première crémaillère (22) et dans lequel la deuxième crémaillère (24) engrène également la roue dentée et entraîne la roue dentée.

11. Engin de chantier automoteur selon la revendication 10, **caractérisé en ce que** les crémaillères (22, 24) parallèles l'une à l'autre sont disposées sur des côtés opposés de la roue dentée et les dents de la première et de la deuxième crémaillère se font face les unes aux autres.

12. Engin de chantier automoteur selon la revendication 10 ou 11, **caractérisé en ce que** le deuxième moyen d'entraînement linéaire (40) est un deuxième moyen d'entraînement hydraulique ou pneumatique et comporte de préférence au moins une troisième chambre de travail (42) pouvant être remplie d'un milieu hydraulique ou pneumatique.

13. Engin de chantier automoteur selon la revendication 12, **caractérisé en ce que** l'au moins un deuxième moyen d'entraînement hydraulique ou pneumatique (42) comporte, outre la troisième chambre de travail (42), au moins une quatrième chambre de travail (44) ultérieure pouvant être remplie d'un milieu hydraulique ou pneumatique.

14. Engin de chantier automoteur selon la revendication 13, **caractérisé en ce que** la troisième et la quatrième chambre de travail (40, 42) sont disposées dans deux cylindres séparés ou dans un cylindre (65), dans lequel, lors d'une disposition dans un cylindre, le cylindre peut être utilisé à la manière d'un cylindre hydraulique ou pneumatique à double effet.

15. Engin de chantier automoteur selon l'une des revendications 1 à 14, **caractérisé en ce qu'**au moins un capteur est disposé sur le premier et/ou sur le deuxième moyen d'entraînement linéaire, au moyen duquel il est possible de saisir la position angulaire actuelle de la direction et/ou la vitesse actuelle de direction du dispositif de conduite respectif.

16. Engin de chantier automoteur selon la revendication 15, **caractérisé en ce que** l'au moins un capteur est un capteur de mouvement, au moyen duquel il est possible de saisir le mouvement de réglage du premier et/ou du deuxième moyen d'entraînement linéaire.
